# EUROPÄISCHE PATENTSCHRIFT

(11) **EP 2 299 392 B1**
(45) Veröffentlichungstag und Bekanntmachung des Hinweises auf die Patenterteilung: **16.01.2013**
(21) Anmeldenummer: 10009451.5
(22) Anmeldetag: 10.09.2010
(51) Int. Cl.: G06K 19/077

(54) **Kennzeichnung eines portablen Datenträgers**
Identification of a portable data carrier
Caractérisation d'un support de données portable

(30) Priorität: 14.09.2009 DE 102009041506
(43) Veröffentlichungstag der Anmeldung: 23.03.2011
(73) Patentinhaber: Giesecke & Devrient GmbH, 81677 München (DE)
(72) Erfinder: Baldischweiler, Michael, 81825 München (DE); Scharf, Jörn Frederik, 80339 München (DE); Menacher, Rainer, 81927 München (DE)

(56) Entgegenhaltungen:
- US-A1- 2002 050 527

## Beschreibung

Die Erfindung betrifft ein Verfahren zum Kennzeichnen eines eine Chipkarte umfassenden portablen Datenträgers sowie ein hierfür verwendetes kartenförmiges Substrat.

Bei Kennzeichnungsverfahren nach dem Stand der Technik, mit denen eine individuelle Kennzeichnung, wie z.B. eine Serien- und/oder Verifikationsnummer in Form von Schriftzeichen oder sonstigen Kennzeichnungssymbolen, auf einen portablen Datenträger aufgebracht wird, werden etwaige Komponenten des Datenträgers, z.B. eine Chipkarte, ein Gehäuse und/oder eine Umverpackung, vor dem Zusammenbau einzeln gekennzeichnet, z.B. durch Aufdrucken oder ein sonstiges für die jeweilige Komponente geeignetes Beschriftungsverfahren.

Die US 2002/0050527 A1 offenbart ein scheckkartenförmiges Chipkartensubstrat mit heraustrennbarer Chipkarte, wobei auf die Chipkarte als auch auf das Substrat eine chipkartenspezifische Seriennummer aufgebracht ist.

Dennoch besteht das Problem, dass auf alle zu kennzeichnenden Komponenten, die für einen Datenträger bestimmt sind, tatsächlich übereinstimmende Kennzeichnungen aufgebracht und genau diese übereinstimmend gekennzeichneten Komponenten anschließend identifiziert und zusammengesetzt werden müssen, um zuverlässig korrekt gekennzeichnete Datenträger zu erhalten. Im Rahmen eines Produktionsprozesses, der kontinuierlich derartige portable Datenträger herstellt, erfordert die korrekte Kennzeichnung einen erheblichen Koordinations- und Abstimmungsbedarf hinsichtlich der Kennzeichnung der einzelnen Komponenten und der Auswahl der .gekennzeichneten Komponenten beim Zusammenbau des Datenträgers.

Es ist daher die Aufgabe der vorliegenden Erfindung, diesen Koordinations-und Abstimmungsbedarf zu reduzieren und dadurch Fehler bei der Kennzeichnung solcher Datenträger zu vermeiden.

Diese Aufgabe wird durch die Merkmale der unabhängigen Ansprüche gelöst. In davon abhängigen Ansprüchen sind vorteilhafte Ausgestaltungen und Weiterbildungen der Erfindung angegeben.

Bei einem Verfahren zum Kennzeichnen eines eine Chipkarte umfassenden portablen Datenträgers mit einer individuellen Kennzeichnung wird die Kennzeichnung des Datenträgers übereinstimmend auf die Chipkarte und auf zumindest eine weitere mit dem Datenträger in Zusammenhang stehende Komponente aufgebracht, z.B. auf ein Datenträgergehäuse, eine Umverpackung oder Dokumentation des Datenträger oder dergleichen. Erfindungsgemäß wird die individuelle Kennzeichnung dabei auf die Chipkarte und auf zumindest ein Kennzeichnungselement, das zur Kennzeichnung der zumindest einen weiteren mit den Datenträger im Zusammenhang stehenden Komponente bestimmt ist, in einem zusammenhängenden Arbeitsschritt aufgebracht. Diese weitere Komponente wird dann gekennzeichnet, indem das gekennzeichnete Kennzeichnungselement an der Komponente angebracht oder befestigt wird.

Da sämtliche zu kennzeichnenden Komponenten des Datenträgers einschließlich der Chipkarte entweder unmittelbar (wie z.B. die direkt gekennzeichnete Chipkarte) oder mittelbar über ein Kennzeichnungselement (wie z.B. ein indirekt durch Anbringen eines gekennzeichneten Kennzeichnungselements gekennzeichnetes Datenträgergehäuse) in einem zusammenhängenden Arbeitsschritt gekennzeichnet werden, entfällt die oben angesprochene Koordinierung und Abstimmung bei der übereinstimmenden Kennzeichnung der einzelnen Komponenten eines Datenträgers, da eine Fehlkennzeichnung einzelner Komponenten (bzw. Kennzeichnungselemente) nicht mehr auftreten kann. Insbesondere wird eine eindeutige Zuordnung der gekennzeichneten Chipkarte zu den gekennzeichneten weiteren Komponenten (bzw. deren Kennzeichnungselementen) sichergestellt.

Die beschriebene erfindungsgemäße, übereinstimmende Kennzeichnung wird dadurch erreicht, dass ein kartenförmiges Substrat in einem zusammenhängenden Arbeitsschritt derart gekennzeichnet wird, dass eine aus dem Substrat herauslösbare und in den Datenträger einsetzbare Chipkarte mit der individuellen Kennzeichnung des portablen Datenträgers versehen wird und zumindest ein aus dem Substrat herauslösbares bzw. von dem Substrat ablösbares Kennzeichnungselement, welches zur Kennzeichnung einer mit dem Datenträger in Zusammenhang stehenden weiteren Komponente des Datenträgers bestimmt und geeignet ist, in dem gleichen Arbeitsschritt ebenfalls mit der Kennzeichnung versehen wird.

Dadurch, dass das erfindungsgemäße Substrat als einzelner, zusammenhängender Gegenstand sowohl die herauslösbare Chipkarte umfasst als auch zumindest ein herauslösbares bzw. ablösbares Kennzeichnungselement umfasst bzw. trägt, lässt sich die Kennzeichnung besonders einfach in einem zusammenhängenden Arbeitsschritt übereinstimmend auf die Chipkarte und auf das mindestens eine Kennzeichnungselement aufbringen.

Vorzugsweise werden die einen Chipkartenchip umfassende Chipkarte sowie das zumindest eine Kennzeichnungselement des Substrats in einem zusammenhängenden Schritt jeweils mit der gleichen Kennzeichnung bedruckt, geprägt, laserbeschriftet oder anderweitig übereinstimmend beschriftet. Vorzugsweise äußert sich der Umstand, dass die Chipkarte und alle weiteren Kennzeichnungselemente des Substrats in einem zusammenhängenden Arbeits- bzw. Druckschritt beschriftet werden, darin, dass die übereinstimmende Kennzeichnung auf die Chipkarte und alle weiteren Kennzeichnungselemente mit dem gleichen Beschriftungs- oder Druckverfahren aufgebracht wurde. Darüber hinaus ist es auch möglich, dass alle Kennzeichnungen des Substrats in einem einheitlichen Schrifttyp, einer einheitlichen Schriftgröße oder in einem anderweitig einheitlichen Erscheinungsbild auf das Substrat aufgebracht wurden.

Zum Bedrucken eignen sich beispielsweise Ink-Jet-Druck, Thermodruck, Tampondruck, Laserdruck oder dergleichen. Bei der Laserbeschriftung wird Material mittels eines Lasers geschwärzt oder weggebrannt (graviert). In jedem Falle wird beim Bedrucken, Prägen oder Laserbeschriften des Substrats das Substrat vorzugsweise derart mit dem gleichen Druck-, Präge-, oder Laserbeschriftungsverfahren bearbeitet, dass auf die Chipkarte und das zumindest eine Kennzeichnungselement die Kennzeichnung jeweils gleichartig aufgebracht wird. Dies bedeutet insbesondere, dass jeweils dieselbe Druckvorrichtung, Prägevorrichtung oder Laserbeschriftungsvorrichtung verwendet wird.

Zusätzlich können für die jeweiligen Drucke, Prägungen oder Laserbeschriftungen dieselben oder ähnliche Verfahrensparameter (z.B. Schwärzungsgrad, Prägetiefe, etc.) und/oder dieselben oder ähnliche Schriftarten und/oder dieselben oder ähnliche Schriftgrößen und/oder dieselbe oder eine ähnliche Größe für Kennzeichnungssymbole verwendet werden. Hierdurch kann das zusammenhängende jeweilige Aufdrucken der Kennzeichnung auf die Chipkarte und das zumindest eine Kennzeichnungselement weiter erleichtert werden. Ebenso wird durch das Aufbringen gleichartiger Kennzeichnungen auf das Substrat ein visueller Vergleich dieser Kennzeichnungen erleichtert.

Vorzugweise wird das den Chipkartenchip umfassende Substrat derart perforiert, dass die Chipkarte mit dem Chipkartenchip entlang einer Perforation manuell aus dem Substrat herausgelöst und in einen Datenträgerkörper (z.B. Datenträgergehäuse) des Datenträgers eingesetzt werden kann. Dies bietet den Vorteil, dass zum Herauslösen der Chipkarte aus dem Substrat keinerlei Werkzeuge erforderlich sind. Die Perforation kann insbesondere mittels Stanzung erfolgen.

Für die Art und Weise, in der ein oder mehrere Kennzeichnungselemente in dem Substrat angeordnet sind, gibt es mehrere Varianten. Einerseits ist es möglich, dass zumindest ein Kennzeichnungselement ähnlich wie die Chipkarte in dem Substrat durch eine Perforation bzw. Stanzung gebildet ist, so dass auch dieses Kennzeichnungselement entlang einer Perforation manuell aus dem Substrat herausgelöst werden kann, um es auf einer hierfür vorgesehenen weiteren mit dem Datenträger in Zusammenhang stehenden Komponente anzubringen, z.B. auf das Datenträgergehäuse, in das die Chipkarte eingesetzt wird.

In einer bevorzugten Ausführungsform wird das Substrat vor oder nach dem Kennzeichnen derart perforiert, dass ein herausgelöstes Kennzeichnungselement ein derart abgeschrägtes Profil besitzt, dass es in eine entsprechend geformte Ausnehmung des Datenträgerkörpers oder eine andere Komponente des Datenträgers einrastbar ist. Hierbei ist beispielsweise die Vorderseite des Kennzeichnungselements, auf der die Kennzeichnung aufgebracht ist, kleiner als die gegenüberliegende Rückseite, so dass das Kennzeichnungselement in eine diesem Profil entsprechende Ausnehmung des Datenträgerkörpers einrastbar ist. Ein derartiges Kennzeichnungselement kann besonders einfach an dem Datenträgerkörper oder einer anderen Datenträgerkomponente angebracht werden. Die Perforation kann hierbei insbesondere mittels Schrägstanzung, d.h. Stanzung mit einer Stanzungsrichtung, die nicht senkrecht zu den durchstanzten Oberflächen verläuft, erfolgen.

In einer zweiten Variante, in der alternativ oder zusätzlich zumindest ein Kennzeichnungselement auf dem Substrat gebildet werden kann, ist das Kennzeichnungselement als Papier- oder Kunststoffschicht derart auf das Substrat aufzubringen, dass es von dem Substrat abgelöst und auf die betreffende weitere mit dem Datenträger in Zusammenhang stehende Komponente aufgeklebt wird, beispielsweise auf eine Dokumentation oder andere mit dem Datenträger im Zusammenhang stehende Unterlagen, z.B. Garantiescheine, für Endnutzer bestimmte Briefumschläge mit Zugangs- oder Authentisierungsdaten oder dergleichen. Ein derartig ausgestaltetes Kennzeichnungselement kann besonders einfach auf die entsprechende Datenträgerkomponente aufgeklebt werden und ist besonders zur Kennzeichnung solcher Datenträgerkomponenten geeignet, auf die aus dem Substrat herausbrechbare Kunststoffkennzeichnungselemente nur schwer aufgebracht werden können, z.B. weil sie aus Papier sind, wie z.B. Briefumschläge, Papierunterlagen oder dergleichen.

Die beschriebenen herauslösbaren oder ablösbaren Kennzeichnungselemente werden bevorzugt auf einen Datenträgerkörper, eine für den Datenträger bestimmte Umverpackung oder mit dem Datenträger im Zusammenhang stehende Unterlagen, Briefumschläge oder dergleichen aufgebracht. Besonders bevorzugt ist der zu kennzeichnende portable Datenträger ein USB-Speichertoken, das mit einem austauschbaren Flash-Speicher, wie z.B. einer Micro-SD-Karte oder einer anderen geeigneten Speicherkarte, einem zugehörigen Speicher-Controller, einer austauschbaren Chipkarte bzw. Smart Card zur Bereitstellung von Sicherheitsfunktionalitäten (z.B. Datenverschlüsselung und Authentisierung) sowie mit einem Prozessor ausgestattet ist. Bei einem solchen "Mobility-Token" wird insbesondere die Chipkarte/Smart Card und die Speicherkarte sowie vorzugsweise das Datenträgergehäuse mit der USB-Schnittstelle erfindungsgemäß mittels des beschriebenen Substrats gekennzeichnet.

Ein Kennzeichnungselement kann gemäß einer dritten Variante auch durch denjenigen Substratanteil gebildet werden, der weder die Chipkarte noch ein anders Kennzeichnungselement definiert und nach Herauslösen und/oder Ablösen der Chipkarte und aller Kennzeichnungselemente als Restsubstrat verbleibt. Hierbei ist der verbleibende Substratanteil derart dimensioniert und die Kennzeichnung derart auf dem verbleibenden Substratanteil aufgebracht, dass das Kennzeichnungselement derart in einen Fensterumschlag (z.B. ein Briefkuvert mit einem Duchsichtfenster) eingeschoben werden kann, dass die aufgebrachte Kennzeichnung durch das Fenster des Fensterumschlags sichtbar ist. In einen solchen Fensterumschlag können mit dem portablen Datenträger im Zusammenhang stehende Unterlagen eingelegt und dem Endkunden zur Verfügung gestellt werden.

Generell kann die Kennzeichnung auf ein oder mehrere Kennzeichnungselemente und/oder auf die Chipkarte auch derart aufgebracht werden, dass auch eine graphische Codierung der Kennzeichnung aufgebracht wird, z.B. ein ein- oder zweidimensionaler Barcode oder dergleichen, der besonders einfach maschinell erfasst werden kann, z.B. mittels eines Barcodescanners. Dadurch kann zudem ein verbesserter Schutz gegen Nachahmungen bzw. Fälschungen erzielt werden.

Die erfindungsgemäße Kennzeichnung der Datenträgerkomponenten bzw. die Bereitstellung des erfindungsgemäßen Substrats kann insbesondere im Rahmen eines Personalisierungsvorgangs der Chipkarte erfolgen, bei dem neben den üblichen Personalisierungsdaten auch die Kennzeichnung in den Chipkartenchip eingeschrieben werden kann. Die Kennzeichnung kann dann von der Elektronik des portablen Datenträgers aus der Chipkarte ausgelesen werden und steht diesem für weitere elektronische Kennzeichnungen, zur Verschlüsselung von Daten oder zur Authentifizierung zur Verfügung.

Vorzugsweise umfasst zumindest ein Kennzeichnungselement einen drahtlos auslesbaren Transponderchip, in den die Kennzeichnung eingeschrieben wird, z.B. im Rahmen der oben erwähnten Personalisierung des Datenträgers. Dadurch kann die Kennzeichnung kontaktlos erfasst werden, z.B. für Authentifizierungszwecke oder dergleichen. Der drahtlos auslesbare Transponderchip kann des Weiteren im Wesentlichen nachahmungssicher ausgestaltet sein, so dass ein verbesserter Schutz des Kennzeichnungselements gegen Nachahmung bzw. Fälschung erzielt wird. Die Kennzeichnung wird dann redundant in den Transponderchip eingeschrieben und auf das den Transponderchip umfassende Kennzeichnungselement aufgedruckt. Durch Abgleich der in den Transponderchip eingeschrieben Kennzeichnung mit der aufgedruckten Kennzeichnung wird ein weiter Fälschungsschutz bereitgestellt. Selbstverständlich kann ein solcher Transponderchip auch weitere Funktionalitäten bereitstellen, die über die zusätzliche elektronische Kennzeichnung des Datenträgers hinausgehen.

Weitere Merkmale und Vorteile der Erfindung ergeben sich aus der folgenden Beschreibung von erfindungsgemäßen Ausführungsbeispielen sowie weiteren Ausführungsalternativen im Zusammenhang mit den Zeichnungen, die zeigen:
- Fig.1: schematisch die Schritte eines erfindungsgemäßen Kennzeich- nungsverfahrens;
- Fig. 2: schematisch ein erfindungsgemäßes kartenförmiges Substrat;
- Fig. 3: schematisch einen portablen Datenträger mit einer Chipkarte und einem Kennzeichnungselement;
- Fig. 4: schematisch einen Schnitt entlang der Linie A-B durch das in Fig. 2 dargestellte Substrat (Fig. 4a), sowie eine für ein schräg gestanztes kartenförmiges Kennzeichnungselement passend geformte Aus- nehmung eines Datenträgergehäuses (Fig. 4b).

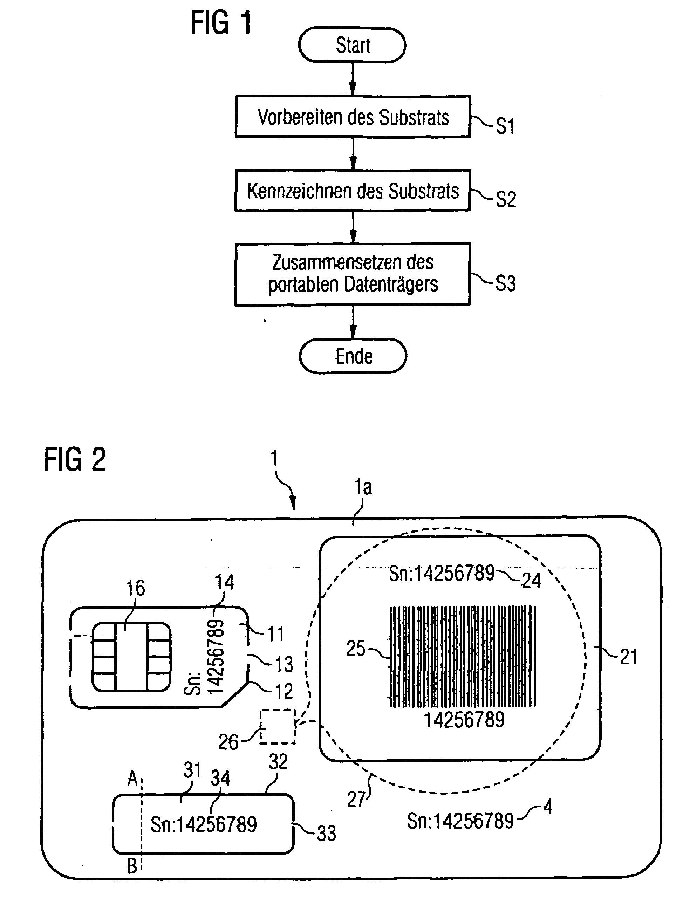

In Fig. 1 sind schematisch die Schritte eines erfindungsgemäßen Verfahrens zum Kennzeichnen eines eine Chipkarte 11 umfassenden portablen Datenträgers 51 mit einer individuellen Kennzeichnung 4, 14, 24, 25, 34 dargestellt.

Das Verfahren umfasst einen ersten Schritt S1, in dem das in Fig. 2 dargestellte Substrat 1 für die Kennzeichnung vorbereitet bereitgestellt wird. Der Schritt S1 umfasst wiederum den Teilschritt S1a des Perforierens des Substrats 1 entlang der Umrandung 32, 33 des kartenförmigen Kennzeichnungselements 31 und der Umrandung 12,13 der Chipkarte 11 mit Chip 16. Bei dem Perforieren wird entlang dieser Umrandungen 12, 13, 32, 33 eine Fuge oder ein Durchbruch in das Substrat gestanzt, wobei im vorliegenden Fall die wesentlichen Teile 12, 32 der Umrandungen 12, 13, 32, 33 durchgehend durchgestanzt werden und nur kleine stegartige Abschnitte 13, 33 der Umrandungen 12, 13, 32, 33 verbleiben, an denen die Chipkarte 11 bzw. das Kennzeichnungselement 31 mit dem Substrat 1 verbunden ist. Hierdurch lässt sich die Chipkarte 11 und das Kennzeichnungselement 31 später leicht manuell oder maschinell aus dem Substrat 1 herauslösen. In dem Teilschritt S1b wird das selbstklebende Kennzeichnungselement (Aufkleber) 21 ablösbar auf das Substrat 1 aufgeklebt. Der Aufkleber 21 hat eine Oberfläche aus bedruckbarem Kunststoff oder aus Papier.

In einem Schritt S2 des Kennzeichnens des Substrats 1 wird in einem Teilschritt S2a das bedruckbare Substrat 1 mitsamt dem aufgeklebten Aufkleber 21 in einem zusammenhängenden Arbeitsschritt bedruckt. Hierbei wird in einem zusammenhängenden Druckarbeitsschritt dieselbe Kennzeichnung 4, 14, 24, 25, 34 auf die Chipkarte 11, den Aufkleber 21, das kartenförmige Kennzeichnungselement 31 und auf das Substrat 1 selbst aufgedruckt.

Als Druckverfahren kommt dabei insbesondere Ink-Jet-Druck, Thermodruck, Tampondruck und Laserdruck in Frage. Um sowohl das Substrat 1, die Chipkarte 11, den Aufkleber 21 und das kartenförmige Kennzeichnungselement 31 in einem zusammenhängenden Arbeitsschritt zu bedrucken, wird dasselbe Druckverfahren mit vorzugsweise denselben Verfahrensparametern (z.B. Schwärzungsgrad etc.) für alle zu druckenden Kennzeichnungen 4,14, 24, 25, 34 verwendet. Alternativ können die Kennzeichnungen 4,14, 24, 25, 34 auch mittels Laserbeschriftung durch Schwärzen oder Wegbrennen von Material mittels eines Lasers aufgebracht werden. Des Weiteren können die Kennzeichnungen 4, 14, 24, 25, 34 auch geprägt werden.

In dem vorliegenden Ausführungsbeispiel wurden zum Drucken der Kennzeichnungen 4,14, 24, 34 dieselben Schriftarten verwendet. Dies erleichtert es, diese Kennzeichnungen 4, 14, 24, 34 zu vergleichen. Zu diesem Zweck könnte zudem auch dieselbe Schriftgröße und/oder eine auf die Farbe des Datenträgergehäuses 54 abgestimmte Schrift- oder Hintergrundfarbe verwendet werden. Falls der portable Datenträger 51, an den das kartenförmige Kennzeichnungselement 31 angebracht wird, ein z.B. anthrazitfarbenes Gehäuse besitzt, wird der das kartenförmige Kennzeichnungselement 31 bildende Abschnitt des Substrats 1 vorzugsweise ebenfalls anthrazitfarbig gehalten. Um die Lesbarkeit zu erhöhen, wird dann vorzugsweise zum Druck eine weiße oder schwarze Schrift verwendet und die weiteren Kennzeichnungselemente 1a, 21 sowie die Chipkarte 11 werden in einer Farbe gehalten, auf der die weiße Schrift gut lesbar ist.

Auf dem Aufkleber wird die Kennzeichnung zusätzlich noch als Barcode 25 (graphische Codierung der Kennzeichnung) aufgedruckt, der maschinell mittels eines Barcodescanners gelesen werden kann.

In einem Teilschritt S2b wird die Kennzeichnung auch elektronisch in den Chipkartenchip 16 und in einen in dem Substrat 1 eingebrachten, an die Transponderspule 27 angeschlossenen Transponderchip 26 eingeschrieben. Der Teilschritt S2b wird direkt zusammenhängend mit dem Teilschritt S2a ausgeführt, damit die Abstimmung zwischen dem Aufdrucken der Kennzeichnungen 4, 14, 24, 25, 34 (Teilschritt S2a) und dem elektronischen Einbringen der Kennzeichnung in den Chip 16 bzw. den Transponderchip 26 (Teilschritt S2b) erhalten bleibt.

In einem Schritt S3 wird der portable Datenträger 51 aus einzelnen Komponenten zusammengesetzt, die teilweise gekennzeichnet sein können, und mitsamt den zugehörigen, ebenfalls gekennzeichneten Unterlagen verpackt. Dabei wird die mit der Kennzeichnung 14 versehene Chipkarte 11 in den Datenträger 51 eingefügt und die weiteren mit dem Datenträger in Zusammenhang stehenden Komponenten mit den dafür vorgesehenen Kennzeichnungselementen 21 versehen und ggf. in den Datenträger 51 integriert.

Bei dem portablen Datenträger 51 kann es sich insbesondere um ein so genanntes "USB Mobility-Token" handeln. Dieses besitzt neben der austauschbaren Chipkarte 11, die zur Datenverschlüsselung und Authentisierung dient, einen austauschbaren Flash-Speicher (nicht dargestellt), der mittels einer handelsüblichen Speicherkarte (z.B. einer Micro-SD-Karte) realisiert werden kann, einen zugehörigen Speicher-Controller (nicht dargestellt) sowie einen Prozessor (nicht dargestellt). Neben den zuvor genannten Sicherheitsfunktionalitäten können auf einem derartigen Mobility-Token Daten gespeichert sowie Anwendungen gespeichert und ausgeführt werden.

In einem Teilschritt S3a wird der Aufkleber 21 von dem Substrat 1 abgelöst und auf die Umverpackung des portablen Datenträgers 51 aufgeklebt. Die als Barcode codierte Kennzeichnung 25 kann bei Verkauf des Datenträgers 51 mittels eines Barcodescanners z.B. zur Registrierung des Datenträgers 51 ausgelesen werden. Alternativ zum maschinellen Auslesen des Barcodes 25 kann die Kodierung 24 auch abgelesen werden. Da die Kennzeichnung 24, 25 des Aufklebers 21 beim Verkauf des Datenträgers 51 benötigt wird, wird der Aufkleber 21 bereits in der Produktionsstätte auf die Verpackung aufgeklebt. Der selbstklebende Aufkleber 21 kann dabei von Hand oder auch maschinell auf die Verpackung des Datenträgers 51 aufgeklebt werden.

In dem Aufkleber 21 kann optional auch eine als Diebstahlschutz dienende Transponderspule eingebracht sein, die, falls sie nicht durch den Verkäufer deaktiviert wird, bei einer Diebstahlschutzanlage eines Ladengeschäftes einen Alarm auslösen kann. Ebenso denkbar wäre es, den Aufkleber 21 mit einem Transponderchip mit Transponderspule auszustatten, in den in Schritt S2b die Kennzeichnung eingeschrieben wird, beispielsweise als zusätzlicher Schutz vor Produktfälschungen.

In einem Teilschritt S3b wird die Chipkarte 11 und das kartenförmige Kennzeichnungselement 31 aus dem Substrat 1 herausgelöst. Zudem wird die Chipkarte 11 in eine hierfür vorgesehene Chipkartenaufnahme 52 des portablen Datenträgers 51 eingeführt, in der der Chipkartenchip 16 mittels Kontakten (nicht dargestellt) ausgelesen und angesteuert werden kann. Die in dem Chip 16 gespeicherte Kennzeichnung kann beispielsweise zum Verschlüsseln von Daten und zur Authentisierung mittels des portablen Datenträgers 51 dienen. Die auf der Chipkarte 11 aufgedruckte Kennzeichnung 14 verbleibt für einen jederzeit möglichen Abgleich mit den Kennzeichnungen 4, 24, 34 der Kennzeichnungselemente 1a, 21, 31. Das kartenförmige Kennzeichnungselement 31 wird in eine Aufnahme 53 des Datenträgers 51 derart eingebracht, dass die Kennzeichnung 34 nach außen hin sichtbar ist. Die Kennzeichnung 34 dient der Unterscheidung des betreffenden portablen Datenträgers 51 von baugleichen portablen Datenträgern. Die Kennzeichnung 34 auf dem Datenträgergehäuse 54 ist auch nützlich, wenn die Kennzeichnung 34 in ein Datenverarbeitungsgerät eingegeben werden muss.

Es wäre zudem denkbar, das kartenförmige Kennzeichnungselement 31 mit einem Transponderchip, in den im Schritt S2b die Kennzeichnung eingeschrieben wird, und einer Transponderspule auszustatten. Das von der Chipkarte 11 völlig unabhängige Kennzeichnungselement 31 mit Transponderchip ließe sich dann maschinell und kontaktlos auslesen und könnte z.B. zur Authentifizierung eingesetzt werden. Dabei könnte die Kennzeichnung auch redundant sowohl auf dem Chip 16 der Chipkarte 11 als auch auf dem von der Chipkarte 11 unabhängigen Transponderchip gespeichert werden. Durch Abgleich der Kennzeichnung des Chips 16 der Chipkarte 11 und der Kennzeichnung des Transponderchips könnte dann dementsprechend ein weiterer Schutz gegen Fälschung/ Nachahmung des portablen Datenträgers 51 erreicht werden. Hierbei wäre idealerweise ein schwer nachahmbarer Transponderchip zu verwenden.

Um das kartenförmige Kennzeichnungselement 31 an der Aufnahme 53 des portablen Datenträgers 51 zu befestigen, wird die Umrandung 32, 33 des kartenförmigen Kennzeichnungselements 31 mittels Schrägstanzung perforiert, wobei die Aufnahme 53 so geformt ist, dass das schräg gestanzte kartenförmige Kennzeichnungselement 31 in die Aufnahme 53 einrastet.

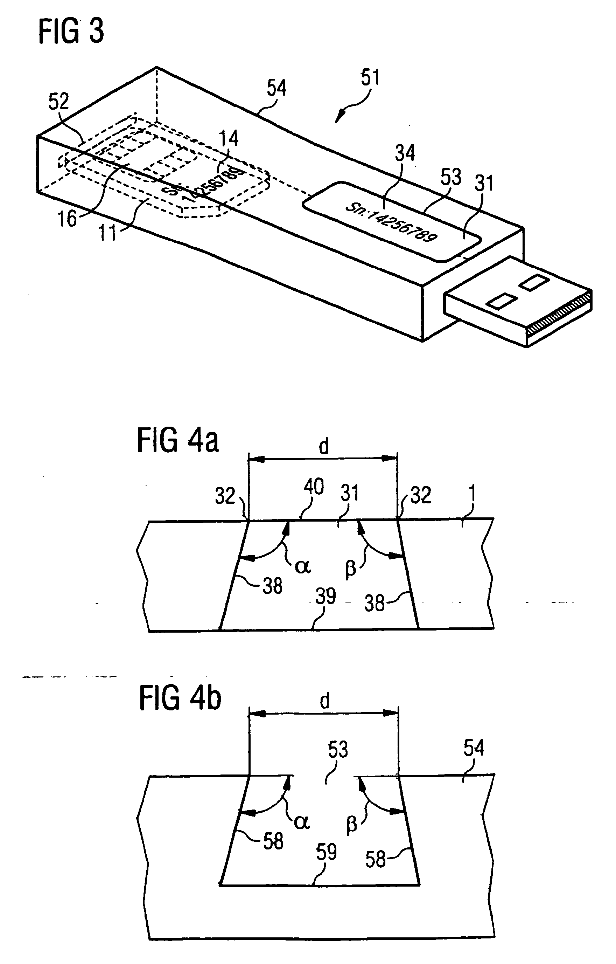

Dies wird im Zusammenhang mit der Fig. 4 genauer beschrieben. Fig. 4a zeigt einen Querschnitt entlang der Linie A-B der Fig. 2. Im Falle einer Schrägstanzung verlaufen die Stanzungsprofile 38 an den gestanzten Teilen 32 der Umrandungen 32, 33 nicht senkrecht zum Substrat 1. Im vorliegenden Fall sind die eingezeichneten Stanzungswinkel α und β größer als 90° (in der Figur überzeichnet dargestellt). In Fig. 4b ist eine entsprechend geformte Aussparung/ Ausnehmung 53 in einem Gehäuse 54 des portablen Datenträgers 51 dargestellt. Die Seitenflächen 58 der Öffnung sind, wie in der Abbildung dargestellt, ebenfalls mit den Winkeln α und β geneigt. Das schräg gestanzte Kennzeichnungselement 31 wird durch die Öffnung der Ausnehmung 53, die in etwa die Breite d der Vorderseite 40 des schräg gestanzten Kennzeichnungselements 31 aufweist, in die Ausnehmung 53 derart eingepresst, dass die bedruckte Oberseite 40 des Kennzeichnungselements 31 nach außen hin sichtbar ist und die Unterseite 39 des Kennzeichnungselements 31 parallel zu und in Kontakt mit der Unterseite 59 der Ausnehmung 53 zum liegen kommt. Da die Stanzungswinkel α und β größer als 90° sind, rastet das schräg gestanzte Kennzeichnungselement 31 in der Ausnehmung 53 ein. Die Stanzungswinkel α und β werden in Abhängigkeit von der Deformierbarkeit des Materials des Gehäuses 54 und des Materials des Kennzeichnungselements 31 derart gewählt, dass sich das Kennzeichnungselement 31 noch ohne wesentliche Beschädigung durch die Öffnung in die Ausnehmung 53 einpressen lässt und zugleich fest in der Ausnehmung 53 einrastet. Alternativ könnte das hier kartenförmige Kennzeichnungselement 31 auch als Aufkleber ausgeführt sein, der auf den portablen Datenträger 51 aufgeklebt wird.

Zusätzlich können natürlich auch weitere mit dem portablen Datenträger 51 im Zusammenhang stehende Komponenten mit einem Kennzeichnungselement gekennzeichnet werden, beispielsweise der Flash-Speicher, der Speicher-Controller, der Prozessor oder auch ggf. eine Platine des portablen Datenträgers 51.

Zuletzt wird ebenfalls im Teilschritt 3b das verbleibende Rest-Substrat 1a, aus/von dem die Kennzeichnungselemente 21, 31 und die Chipkarte 21 herausgelöst/ abgelöst sind, in einen Fensterumschlag eingeführt, der mit den zu dem portablen Datenträger 51 gehörigen Unterlagen (Beschreibung, Garantieunterlagen, etc.) verbunden ist (z.B. in die Gebrauchsanleitung eingelegt oder eingeklebt ist). Durch das Fenster des Fensterumschlags bleibt die Kennzeichnung 4 des Rest-Substrats 1a sichtbar. Durch die Aufbewahrung des mit der Kennzeichnung 4 versehenen Rest-Substrats 1a bleibt die Kennzeichnung 4 auch bei Verlust des portablen Datenträgers 51 verfügbar und kann beispielsweise genutzt werden, um bei Verlust des Datenträgers 51 Ersatz zu beschaffen oder auch um den Datenträger 51 in einer Zentraldatenbank als verloren zu kennzeichnen. Des Weiteren ist es denkbar, dass die Kennzeichnung auch ohne den Datenträger 51 eine Funktion hat, z.B. zur Benutzung eines Datenverarbeitungsgeräts erforderlich ist. Der in dem Rest-Substrat 1a eingearbeitete, schwer nachahmbare, an die Transponderspule 27 angeschlossene Transponderchip 26 dient zum Schutz gegen Nachahmungen/ Fälschungen.

Alternativ könnte auch ein weiterer mit der Kennzeichnung 4 und/ oder dem Transponderchip 26 mit Transponderspule 27 versehener Aufkleber vorgesehen sein, der in die Unterlagen eingeklebt wird.

Zur Durchführung des Teilschritts S3b sind keine zusätzlichen Vorrichtungen erforderlich. Daher kann dieser rein manuell durchführbare Teilschritt S3b auch auf Seite des Endverbrauchers erfolgen.

Als Abwandlung des geschilderten Verfahrens ist auch denkbar, dass der Teilschritt S1a des Perforierens entfällt und dass stattdessen in dem Teilschritt S3b die bereits gekennzeichnete Chipkarte 11 und das gekennzeichnete Kennzeichnungselement 31 entlang der Umrandungen 12, 13 bzw. 32, 33 komplett aus dem Substrat 1 herausgestanzt und in den portablen Datenträger 51 eingesetzt werden. In diesem Fall kann es sinnvoll sein, vorzugsweise bei dem Teilschritt S2a, die Umrandungen 12, 13 bzw. 32, 33 auf das Substrat 1 aufzudrucken.

## Patentansprüche

1. Verfahren zum Kennzeichnen eines eine Chipkarte (11) umfassenden portablen Datenträgers (51) mit einer individuellen Kennzeichnung (4, 14, 24, 25, 34), wobei die Kennzeichnung (4,14, 24, 25, 34) auf die Chipkarte (11) und zumindest eine weitere mit dem Datenträger (51) in Zusammenhang stehende Komponente aufgebracht wird, **dadurch gekennzeichnet, dass** die Kennzeichnung (4, 14, 24, 25, 34) auf die Chipkarte (11) und auf ein Kennzeichnungselement (1a,21,31), das zur Kennzeichnung der zumindest einen Komponente bestimmt ist, in einem zusammenhängenden Arbeitsschritt aufgebracht wird und anschließend die Komponente gekennzeichnet wird, indem das gekennzeichnete Kennzeichnungselement (1a, 21, 31) an der Komponente angebracht oder befestigt wird.

2. Verfahren nach Anspruch 1, **dadurch gekennzeichnet, dass** ein kartenförmiges Substrat (1), das die Chipkarte (11) mit einem Chipkartenchip (16) umfasst und zumindest ein Kennzeichnungselement (1a, 21, 31) umfasst oder ablösbar trägt, in einem zusammenhängenden Schritt derart bedruckt oder geprägt oder laserbeschriftet wird, dass auf die Chipkarte (11) und auf das zumindest eine Kennzeichnungselement (1a, 21, 31) die Kennzeichnung (4, 14, 24, 25, 34) jeweils aufgedruckt oder aufgeprägt oder mit Laserbeschriftung aufgebracht wird.

3. Verfahren nach Anspruch 2, **dadurch gekennzeichnet, dass** das den Chipkartenchip (16) umfassende Substrat (1) derart perforiert wird, dass die Chipkarte (11) mit dem Chipkartenchip (16) entlang einer Perforation manuell aus dem Substrat (1) herausgelöst werden kann, wobei die Chipkarte (11), auf die die Kennzeichnung (14) aufgebracht ist, manuell aus dem Substrat (1) herausgelöst wird und in einen Datenträgerkörper (54) des Datenträgers (51) eingesetzt wird.

4. Verfahren nach Anspruch 2 oder 3, **dadurch gekennzeichnet, dass** zumindest ein Kennzeichnungselement (31) gebildet wird, indem das Substrat (1) derart perforiert wird, dass das Kennzeichnungselement (31) entlang einer Perforation manuell aus dem Substrat (1) herausgelöst werden kann, wobei das Kennzeichnungselement (31), auf das die Kennzeichnung (34) aufgebracht ist, manuell aus dem Substrat (1) herausgelöst wird und auf der zumindest einen weiteren mit dem Datenträger(51) in Zusammenhang stehenden Komponente angebracht wird.

5. Verfahren nach Anspruch 4, **dadurch gekennzeichnet, dass** das Substrat (1) derart perforiert wird, dass das herausgelöste Kennzeichnungselement (31) ein derart abgeschrägtes Profil (38) besitzt, dass das Kennzeichnungselement (31) in eine entsprechend geformte Ausnehmung (53) des Datenträgerkörpers (54) einrastbar ist.

6. Verfahren nach einem der Ansprüche 2 bis 5, **dadurch gekennzeichnet, dass** zumindest ein Kennzeichnungselement (21) gebildet wird, indem eine das Kennzeichnungselement (21) bildende Papier- oder Kunststoffschicht (21) ablösbar auf das Substrat (1) aufgebracht wird, wobei das Kennzeichnungselement (21), auf das die Kennzeichnung (24, 25) aufgebracht ist, von dem Substrat (1) abgelöst wird und auf die zumindest eine weitere mit dem Datenträger (51) in Zusammenhang stehende Komponente aufgeklebt wird.

7. Verfahren nach einem der Ansprüche 4 bis 6, **dadurch gekennzeichnet, dass** die zumindest eine weitere mit dem Datenträger (51) in Zusammenhang stehende Komponente ein Datenträgerkörper (54) des Datenträgers (51), eine für den Datenträger (51) bestimmte Umverpackung oder mit dem Datenträger (51) im Zusammenhang stehende Unterlagen ist/sind und dass das herausgelöste oder abgelöste Kennzeichnungselement (1a, 21, 31) in die Komponente eingelassen, an der Komponente befestigt oder auf die Komponente aufgeklebt wird.

8. Verfahren nach einem der Ansprüche 2 bis 7, **dadurch gekennzeichnet, dass** ein Kennzeichnungselement (1a) durch denjenigen verbleibenden Substratanteil (1a) des Substrats (1) gebildet wird, der weder die Chipkarte (11) noch ein anders Kennzeichnungselement (21, 31) bildet, wobei der verbleibende Substratanteil (1a) derart dimensioniert ist und die Kennzeichnung (4) derart auf den das Kennzeichnungselement (1a) bildenden, verbleibenden Substratanteil (1a) aufgebracht wird, dass das Kennzeichnungselement (1a) derart in einen Fensterumschlag eingeschoben werden kann, dass die aufgebrachte Kennzeichnung (4) durch ein Fenster des Fensterumschlags sichtbar ist.

9. Verfahren nach einem der Ansprüche 1 bis 8, **dadurch gekennzeichnet, dass** auf das zumindest eine Kennzeichnungselement (21) auch eine graphische Codierung (25) oder Kennzeichnung (24, 25) aufgebracht wird, insbesondere ein Barcode (25).

10. Verfahren nach einem der Ansprüche 1 bis 9, **dadurch gekennzeichnet, dass** die Kennzeichnung im Rahmen einer Personalisierung der Chipkarte (11) in den Chipkartenchip (16) eingeschrieben wird.

11. Verfahren nach einem der Ansprüche 1 bis 10, **dadurch gekennzeichnet, dass** das zumindest eine Kennzeichnungselement (1a) einen drahtlos auslesbaren Transponderchip (26) umfasst und die Kennzeichnung in den Transponderchip (26) eingeschrieben wird.

12. Verfahren nach einem der Ansprüche 1 bis 11, **dadurch gekennzeichnet, dass** das Verfahren als Bestandteil eines Verfahrens zur Herstellung des portablen Datenträgers (51) und/oder als Bestandteil eines Verfahrens zur Personalisierung der Chipkarte (11) ausgeführt wird.

13. Kartenförmiges Substrat (1), umfassend eine mit einer individuellen Kennzeichnung (14) eines portablen Datenträgers (51) versehene, aus dem Substrat (1) herauslösbare und in den Datenträger (51) einsetzbare Chipkarte (11), **dadurch gekennzeichnet, dass** das Substrat (1) weiterhin zumindest ein ebenfalls mit der Kennzeichnung (4, 24, 25, 34) versehenes Kennzeichnungselement (1a, 21, 31) herauslösbar umfasst oder ablösbar trägt, welches zur Kennzeichnung einer mit dem Datenträger (51) in Zusammenhang stehenden weiteren Komponente bestimmt und geeignet ist.

14. Substrat (1) nach Anspruch 13, **dadurch gekennzeichnet, dass** das Substrat (1) derart mit dem gleichen Druckverfahren bedruckt oder Prägeverfahren geprägt oder Laserbeschriftungsverfahren laserbeschriftet ist, dass auf der Chipkarte (11) und auf dem zumindest einen Kennzeichnungselement (1a, 21, 31) die Kennzeichnung (4, 14, 24, 25, 34) jeweils gleichartig aufgebracht ist.

15. Verwendung eines Substrats (1) nach Anspruch 13 oder 14 zum Kennzeichnen des portable Datenträger (51) mit der individuellen Kennzeichnung (4,14, 24, 25, 34) gemäß einem Verfahren nach einem der Ansprüche 1 bis 12.

## Claims

1. A method for marking a portable data carrier (51) comprising a chip card (11) with an individual marking (4, 14, 24, 25, 34), wherein the marking (4, 14, 24, 25, 34) is applied to the chip card (11) and at least one further component related to the data carrier (51), **characterized in that** the marking (4, 14, 24, 25, 34) is applied in one contiguous working step to the chip card (11) and to a marking element (1a, 21, 31) intended for marking the at least one component, and the component is subsequently marked **in that** the marked marking element (1a, 21, 31) is attached or fastened to the component.

2. The method according to claim 1, **characterized in that** a card-shaped substrate (1) comprising the chip card (11) with a chip card chip (16) and comprising or detachably bearing at least one marking element (1a, 21, 31) is so printed or embossed or laser written in one contiguous step that the marking (4,14,24,25,34) is respectively printed on or embossed in or applied by laser writing to the chip card (11) and the at least one marking element (1a, 21, 31).

3. The method according to claim 2, **characterized in that** the substrate (1) comprising the chip card chip (16) is perforated such that the chip card (11) with the chip card chip (16) can be manually removed from the substrate (1) along a perforation, wherein the chip card (11) to which the marking (14) is applied is manually removed from the substrate (1) and inserted in a data carrier body (54) of the data carrier (51).

4. The method according to claim 2 or 3, **characterized in that** at least one marking element (31) is formed **in that** the substrate (1) is perforated such that the marking element (31) can be manually removed from the substrate (1) along a perforation, wherein the marking element (31) to which the marking (34) is applied is manually removed from the substrate (1) and attached to the at least one further component related to the data carrier (51).

5. The method according to claim 4, **characterized in that** the substrate (1) is perforated such that the removed marking element (31) has a profile (38) that is beveled in such a fashion that the marking element (31) can be locked in a correspondingly shaped recess (53) of the data carrier body (54).

6. The method according to any of the claims 2 to 5, **characterized in that** at least one marking element (21) is formed **in that** a paper layer or plastic layer (21) forming the marking element (21) is detachably applied to the substrate (1), wherein the marking element (21) to which the marking (24, 25) is applied is detached from the substrate (1) and bonded to the at least one further component related to the data carrier (51).

7. The method according to any of the claims 4 to 6, **characterized in that** the at least one further component related to the data carrier (51) is/ are a data carrier body (54) of the data carrier (51), an outer packaging intended for the data carrier (51) or documents related to the data carrier (51), and that the removed or detached marking element (1a,21,31) is embedded in the component, fastened to the component or bonded to the component.

8. The method according to any of the claims 2 to 7, **characterized in that** a marking element (1a) is formed by that remaining substrate portion (1a) of the substrate (1) that neither forms the chip card (11) nor a further marking element (21,31), wherein the remaining substrate portion (1a) is dimensioned such that and the marking (4) is applied to the remaining substrate portion (1a) forming the marking element (1a) such that the marking element (1a) can be introduced into a window envelope in such a fashion that the applied marking (4) is visible through a window of the window envelope.

9. The method according to any of the claims 1 to 8, **characterized in that** to the at least one marking element (21) there is also applied a graphic coding (25) of the marking (24, 25), in particular a bar code (25).

10. The method according to any of the claims 1 to 9, **characterized in that** the marking is written to the chip card chip (16) within the framework of a personalization of the chip card (11).

11. The method according to any of the claims 1 to 10, **characterized in that** the at least one marking element (1a) comprises a wirelessly readable transponder chip (26) and the marking is written to the transponder chip (26).

12. The method according to any of the claims 1 to 11, **characterized in that** the method is carried out as part of a method for producing the portable data carrier (51) and/ or as part of a method for personalizing the chip card (11).

13. A card-shaped substrate (1) comprising a chip card (11) which is furnished with an individual marking (14) of a portable data carrier (51) and which can be removed from the substrate (1) and can be inserted in the data carrier (51), **characterized in that** the substrate (1) further removably comprises or detachably bears at least one marking element (1a, 21, 31) also furnished with the marking (4, 24, 25, 34), said marking element being intended and suitable for marking a further component related to the data carrier (51).

14. The substrate (1) according to claim 13, **characterized in that** the substrate (1) is so printed through the same printing method or embossed through the same embossing method or laser written through the same laser writing method that the marking (4, 14, 24, 25, 34) is applied in respectively like manner to the chip card (11) and to the at least one marking element (1a, 21, 31).

15. An employment of a substrate (1) according to claim 13 or 14 for marking the portable data carrier (51) with the individual marking (4, 14, 24, 25, 34) in accordance with a method according to any of the claims 1 to 12.

## Revendications

1. Procédé de marquage, sous forme de marque individuelle (4, 14, 24, 25, 34), d'un support de données (51) portable comprenant une carte à puce (11), la marque (4, 14, 24, 25, 34) étant appliquée sur la carte à puce (11) et sur au moins un autre composant se trouvant en rapport avec le support de données (51), **caractérisé en ce que** la marque (4, 14, 24, 25, 34) est appliquée lors d'une opération d'un seul tenant sur la carte à puce (11) et sur un élément de marque (1a, 21, 31) destiné au marquage du au moins un composant et **en ce que** le composant est ensuite marqué, ce qui a lieu **en ce que** l'élément de marque (1a, 21, 31) marqué est appliqué ou fixé au composant.

2. Procédé selon la revendication 1, **caractérisé en ce qu'**un substrat (1) en forme de carte qui comprend la carte à puce (11) avec une puce de carte à puce (16) et comprend ou porte de manière amovible au moins un élément de marque (1 a, 21, 31) est, lors d'une opération d'un seul tenant, imprimé ou gaufré ou marqué au laser de telle façon que, sur la carte à puce (11) et sur le au moins un élément de marque (1 a, 21, 31), la marque (4, 14, 24, 25, 34) est respectivement appliquée sous forme imprimée ou gaufrée ou marquée au laser.

3. Procédé selon la revendication 2, **caractérisé en ce que** le substrat (1) comprenant la puce de carte à puce (16) est perforé de telle manière que la carte à puce (11) avec la puce de carte à puce (16) peut être détachée manuellement du substrat (1) le long d'une perforation, la carte à puce (11) sur laquelle est appliquée la marque (14) étant détachée manuellement du substrat (1) et étant insérée dans un corps de support de données (54) du support de données (51).

4. Procédé selon la revendication 2 ou 3, **caractérisé en ce qu'**au moins un élément de marque (31) est constitué **en ce que** le substrat (1) est perforé de telle manière que l'élément de marque (31) peut être détaché manuellement du substrat (1) le long d'une perforation, l'élément de marque (31) sur lequel est appliquée la marque (34) étant détaché manuellement du substrat (1) et étant appliqué sur le au moins un autre composant se trouvant en rapport avec le support de données (51).

5. Procédé selon la revendication 4, **caractérisé en ce que** le substrat (1) est perforé de telle manière que l'élément de marque (31) détaché possède un profil (38) biseauté de telle manière que l'élément de marque (31) est encliquetable dans une encoche (53) ayant une forme correspondante du corps de support de données (54).

6. Procédé selon une des revendications de 2 à 5, **caractérisé en ce qu'**au moins un élément de marque (21) est constitué **en ce qu'**une couche (21) de papier ou de matière plastique constituant l'élément de marque (21) est appliquée de manière amovible sur le substrat (1), l'élément de marque (21) sur lequel est appliquée la marque (24, 25) étant détaché du substrat (1) et étant collé sur le au moins un autre composant se trouvant en rapport avec le support de données (51).

7. Procédé selon une des revendications de 4 à 6, **caractérisé en ce que** le au moins un autre composant se trouvant en rapport avec le support de données (51) est/sont un corps de support de données (54) du support de données (51), un réceptacle de réemballage destiné au support de données (51) ou des pièces se trouvant en rapport avec le support de données (51) et **en ce que** l'élément de marque (1a, 21, 31) détaché ou enlevé est encastré dans le composant, fixé au composant ou collé sur le composant.

8. Procédé selon une des revendications de 2 à 7, **caractérisé en ce qu'**un élément de marque (1 a) est constitué par la part de substrat (1 a) du substrat (1) restante qui ne constitue ni la carte à puce (11), ni un autre élément de marque (21, 31), la part de substrat (1a) restante étant dimensionnée de telle manière et la marque (4) étant appliquée de telle manière sur la part de substrat (1 a) restante constituant l'élément de marque (1a) que l'élément de marque (1a) peut être introduit de telle manière dans une enveloppe à fenêtre que la marque (4) appliquée est visible à travers une fenêtre de l'enveloppe à fenêtre.

9. Procédé selon une des revendications de 1 à 8, **caractérisé en ce qu'**il est aussi appliqué sur le au moins un élément de marque (21) une codification graphique (25) de la marque (24, 25), notamment un code-barres (25).

10. Procédé selon une des revendications de 1 à 9, **caractérisé en ce que** la marque est inscrite dans la puce de carte à puce (16) dans le cade d'une personnalisation de la carte à puce (11).

11. Procédé selon une des revendications de 1 à 10, **caractérisé en ce que** le au moins un élément de marque (1 a) comprend une puce de transpondeur (26) lisible sans fil et **en ce que** la marque est entrée dans la puce de transpondeur (26).

12. Procédé selon une des revendications de 1 à 11, **caractérisé en ce que** le procédé est exécuté en tant que partie constituante d'un procédé de fabrication du support de données (51) portable et/ou en tant que partie constituante d'un procédé de personnalisation de la carte à puce (11).

13. Substrat (1) en forme de carte, comprenant une carte à puce (11) pourvue d'une marque (14) individuelle d'un support de données (51) portable, détachable du substrat (1) et insérable dans le support de données (51), **caractérisé en ce que** le substrat (1) comprend en outre de manière détachable ou porte de manière amovible au moins un élément de marque (1a, 21, 31) qui est pourvu également de la marque (4, 24, 25, 34) et qui est destiné et approprié au marquage d'un autre composant se trouvant en rapport avec le support de données (51).

14. Substrat (1) selon la revendication 13, **caractérisé en ce que** le substrat (1) est de telle manière imprimé par le même procédé d'impression ou gaufré par le même procédé de gaufrage ou marqué au laser par le même procédé d'inscription au laser que la marque (4, 14, 24, 25, 34) est respectivement appliquée de pareille manière sur la carte à puce (11) et sur le au moins un élément de marque (1a, 21, 31).

15. Utilisation d'un substrat (1) selon la revendication 13 ou 14 pour le marquage du support de données (51) portable sous forme de la marque individuelle (4, 14, 24, 25, 34) conformément à un procédé selon une des revendications de 1 à 12.
